# EUROPÄISCHE PATENTSCHRIFT

(11) **EP 3 096 336 B1**
(45) Veröffentlichungstag und Bekanntmachung des Hinweises auf die Patenterteilung: **29.11.2017**
(21) Anmeldenummer: 16168440.2
(22) Anmeldetag: 04.05.2016
(51) Int. Cl.: H01F 27/28, H01F 27/26, H01F 27/29, H01F 5/04, H01F 27/06, H02M 1/12, H02M 7/42

(54) **INDUKTIVES BAUELEMENT FÜR LEITERPLATTENMONTAGE UND WECHSELRICHTER MIT EINEM LEITERPLATTENMONTIERTEN INDUKTIVEN BAUELEMENT**
INDUCTANCE DEVICE FOR PCB MOUNTING AND INVERTER WITH PCB MOUNTED INDUCTANCE DEVICE
COMPOSANT INDUCTIF POUR MONTAGE DE CIRCUITS IMPRIMES ET ONDULEUR COMPRENANT UN COMPOSANT INDUCTIF MONTE SUR CIRCUITS IMPRIMES

(30) Priorität: 13.05.2015 DE 102015107605
(43) Veröffentlichungstag der Anmeldung: 23.11.2016
(73) Patentinhaber: SMA Solar Technology AG, 34266 Niestetal (DE)
(72) Erfinder: Walczak, Mariusz, 31-928 Kraków (PL); Mulawa, Artur, 32-087 Bibice (PL); Rylko, Marek S., 43-300 Bielsko-Biala (PL); Kusmierczyk, Dorota, 30-384 Kraków (PL)
(74) Vertreter: Lahnor, Peter

(56) Entgegenhaltungen:
- DE-A1-102005 006 344
- US-A1- 2014 375 409

## Beschreibung

### GEBIET DER ERFINDUNG

Die vorliegende Erfindung betrifft ein induktives Bauelement zur Befestigung auf einer Leiterplatte (PCB), umfassend einen Träger zum Tragen einer Drossel mit mindestens zwei Spulen. Die Erfindung betrifft weiterhin einen Wechselrichter mit einem induktiven Bauelement, das auf einer Leiterplatte montiert ist.

### HINTERGRUND DER ERFINDUNG

Ein induktives Bauelement, insbesondere eine Drossel, kann auf einer Leiterplatte (PCB) eines elektrischen oder elektronischen Gerätes, z.B. eines Leistungswandlers, mittels Surface Mount Technology (SMT) oder Through Hole Technology (THT) montiert werden. Hierzu umfassen die elektrischen Anschlüsse des induktiven Bauelementes Leitungen an dem induktiven Bauelement, die in Löcher in der Leiterplatte eingesetzt und auf der Leiterplatte mit Lötpads verlötet sind.

Im Falle einer Drossel umfasst das induktive Bauelement eine Anzahl um einen Kern gewickelter Spulen. Jede Spule umfasst einen Draht mit zwei Endsegmenten, die mit bestimmten Verbindungspunkten auf einer Leiterplatte zu verbinden sind. Je nach Anwendung kann eine Drossel eine erhebliche Anzahl von Spulen umfassen, beispielsweise sechs Spulen für eine Dreiphasengleichtaktstromdrossel zum Unterdrücken von Gleichtaktströmen an einem Ausgang eines Dreiphasen-Wechselrichters, und eine entsprechende Anzahl von Endsegmenten, beispielsweise 12 Endsegmente im Falle der Dreiphasengleichtaktdrossel.

Um die Montage eines solchen induktiven Bauelementes auf einer Leiterplatte zu erleichtern kann das induktive Bauelement einen im wesentlichen flachen Träger umfassen, der die Drossel selbst auf seiner Oberseite trägt und die Positionen der elektrischen Anschlüsse des induktiven Bauelementes, das heißt die Positionen der Endsegmente der Spulen, an einer Unterseite des Trägers vorgibt. Zu diesem Zweck kann der Träger Führungsmittel umfassen, um die Endsegmente der Drähte von der Oberseite zu der Unterseite zu leiten. Normalerweise sind solche Führungsmittel einfache Löcher in dem Träger, durch die der Draht verläuft.

DE10200500634A1 offenbart ein induktives Bauelement umfassend eine Drossel, die auf einer Montageplatte befestigt ist. Die Montageplatte weist Öffnungen zur Aufnahme von Wicklungsenden auf, so dass diese ein gegebenes Rastermaß des induktiven Bauelementes einhalten.

Zur Montage eines induktiven Bauelementes umfassend einen Träger mit besagten Führungsmitteln wird die Drossel hergestellt, indem die für die jeweilige Anwendung erforderliche Anzahl von Spulen auf den Kern gewickelt wird. Die Drossel wird dann auf dem Träger angebracht, um das induktive Bauelement zu bilden, und das induktive Bauelement wird auf der Leiterplatte montiert, entweder mittels Surface Mount Technology für eine Niedrigstrom-Komponente oder mittels Through Hole Technology für eine Hochstrom-Komponente.

Ein mühsamer Teil eines solchen Montagevorgangs ist die Montage der Drossel auf dem Träger. Der Träger hat typischerweise Löcher, die die Drähte führen, um eine stabile Geometrie der Anschlussbelegung der elektrischen Verbindungen zur Verfügung zu stellen. Wenn eine Anzahl von Leitungen durch den Träger geführt werden muss gibt es eine zusätzliche Komplexität bei der Montage, die besondere Aufmerksamkeit erfordert. Insbesondere dann, wenn die Drossel für Hochleistungsanwendungen ausgelegt ist und entsprechend dicke Drähte umfasst kann es umständlich sein, die Endsegmente von einer Anzahl von Drähten mit den Führungsmitteln des Trägers vor und während der Montage der Drossel auf dem Träger gleichzeitig auszurichten.

Als Alternative zu den Löchern in dem Träger können die Führungsmittel Aussparungen an den Seiten des Trägers umfassen, die zusätzlich Klemmmittel umfassen können. In diesem Fall wird die Drossel zunächst auf dem Träger montiert und die Drähte in einem zusätzlichen Schritt in den Aussparungen eingerastet.

DE102004037844A1 offenbart ein induktives Bauelement umfassend einen Spulenkörper mit einer Wickelform und einem Sockel, welcher nach außen offene Nuten umfasst. Drähte können auf die Wickelform aufgewickelt werden, um Spulen zu bilden. Die Enden der Drähte werden in den Nuten des Sockels angeordnet und können wahlweise in die Nuten einrasten, wenn die Nuten in Richtung der Außenseite des Sockels verengt sind.

In induktiven Bauelementen, welche solche Kerben umfassen, um die Endsegmente der Drähte zu fixieren, können in der Regel nur Drähte mit kleinem Durchmesser verwendet werden, während Drähte mit großem Durchmesser durch Löcher in den Träger geführt werden. Der zusätzliche Schritt, den Draht in die Führungsmittel einzupassen, führt zu einer mechanischen Beanspruchung, die Rückstellkräfte erzeugen kann, insbesondere während des Betriebs des induktiven Bauelementes, so dass der Träger eine ausreichende Robustheit aufweisen muss, um die Endsegmente der Drähte in den gewünschten Positionen zu fixieren. Je größer der Drahtdurchmesser desto höher ist die produzierte Rückstellkraft und desto stärker muss somit der Träger sein.

Bei einigen bekannten Lösungen sind die Endsegmente der Drähte an dem Träger mit Klebstoff befestigt, der schwierig zu handhaben und zu stabilisieren ist, wobei zusätzlich das Risiko des Verschütten von Klebstoff auf der Induktivität auftritt und ferner die Montagezeit und der Aufwand erhöht wird.

DE2047901A1 offenbart ein induktives Bauelement, das eine auf einem Spulenträger montierte Drossel umfasst. Der Spulenträger umfasst Kerben. Die Endsegmente eines Drahtes einer Wicklung einer auf dem Spulenträger befestigten Spule sind an der Außenseite des Spulenträgers durch kanalartige Kerben geführt und können durch Kleben oder durch plastische Verformung der Ansätze, die die kanalartige Aussparung bilden, fixiert werden.

US20080129436A1 offenbart eine Trägervorrichtung für eine Spule mit Toroid-Kern umfassend eine Grundplatte und Führungsmittel zur Führung von Drähten der Spule, wobei sich die Führungsmittel im Wesentlichen normal zur Oberfläche der Grundplatte erstrecken. Die Spule kann Isolationsmittel aufweisen, dass in ein Loch des Toroid-Kernes eingeführt werden kann, wobei das Isolationsmittel mittels Fangeinrichtungen an den Führungsmittels fixiert werden kann.

DE8425340U1 offenbart einen Spulenkörper, bei dem Wicklungsenden einer Wicklung an Anschlussstifte angeschlossen sind, wobei eine Schwenkklappe vorgesehen ist, die über die Anschlussstifte überschwenkbar ist und arretierbar ist, so dass über die Anschlussstifte eine isolierte und zugentlastete Verbindung zwischen den Wicklungsenden und einer ebenfalls an die Anschlussstifte anschließbaren äußeren Anschlussleitung entsteht.

US20140375409A1 offenbart einen Transformator mit einer Spule mit einem Trägerteil und einem Windungsteil, wobei eine Sekundärwindung der Spule einen Ausgangsbereich aufweist, der mittels eines an dem Trägerteil anbringbaren Halters positioniert wird.

US20130249665A1 offenbart einen Spulenkörper mit mindestens einer Spule mit mindestens einem Ausgangspin, wobei der mindestens eine Ausgangspin durch einen Pinhalter geführt und mittels des Pinhalters an dem Spulenkörper angebracht ist. US8451081 B2 offenbart eine Spulenvorrichtung mit einem Spulenträger und einer Vielzahl von Spulen, wobei die Endstücke der Windungen der einzelnen Spulen fest mit Anschlüssen verbunden sind, die auf an gegenüberliegenden Seiten des Spulenträgers angebrachten Anschlusssockeln angeordnet sind.

DE102012216693A1 offenbart einen Wechselrichter mit einer dreiphasigen Drossel zur Entkopplung einer Energiequelle von einem Energieversorgungsnetz.

Im Hinblick auf den Stand der Technik gibt es noch einen Bedarf für ein induktives Bauelement für einen Leistungswandler, das einfach zu montieren ist und eine ausreichende mechanische Stabilität bei einer optimalen Materialausnutzung bereitstellt, insbesondere für ein induktives Bauelement mit einer wesentlich reduzierten Montagezeit, das daher kostengünstiger im Vergleich zu Vorrichtungen aus dem Stand der Technik ist.

### ZUSAMMENFASSUNG DER ERFINDUNG

Die Erfindung stellt ein induktives Bauelement mit den Merkmalen des unabhängigen Anspruchs 1 zur Verfügung sowie und einen Wechselrichter mit den Merkmalen des unabhängigen Anspruchs 9 umfassend ein induktives Bauelement. Bevorzugte Ausführungsformen der Erfindung sind in den abhängigen Ansprüchen definiert.

Ein induktives Bauelement zur Montage auf einer Leiterplatte umfasst einen im Wesentlichen flachen Träger und eine Drossel. Die Drossel ist auf einer oberen Seite des Trägers montiert und umfasst einen Kern und mindestens zwei Spulen, die um den Kern gewickelt sind. Die Drähte der wenigstens zwei Spulen umfassen Endsegmente, die sich durch den Träger erstrecken und auf einer zur oberen Seite des Trägers entgegengesetzten unteren Seite des Trägers erstrecken. Der Träger weist ferner Aussparungen zur Führung der Endsegmente durch den Träger auf.

Das induktive Bauelement umfasst Verschlüsse zum Fixieren der Endsegmente der Drähte in den Aussparungen. Unter Verwendung dieser Verschlüsse werden die Endsegmente der Leiter sicher innerhalb der Aussparungen befestigt, nachdem die Drähte in den Aussparungen angeordnet wurden, und die Herstellung wird wesentlich erleichtert, während zur gleichen Zeit die mechanischen Eigenschaften des induktiven Bauelementes verbessert werden, insbesondere durch reduzierte mechanische Spannung auf den Drähten der Wicklungen.

Ein erfindungsgemäßes induktives Bauelement ist dadurch gekennzeichnet, dass Paare von Endsegmenten in Paaren von Aussparungen angeordnet und durch gemeinsame Verschlüsse fixiert sind. Ein gemeinsamer Verschluss kann dabei ein Paar von Endsegmenten in einem Paar von Aussparungen und zusätzlich weitere einzelne Endsegmente in weiteren einzelnen Aussparungen und/oder weitere Paare von Endsegmenten in weiteren Paaren von Aussparungen fixieren.

Die Verschlüsse können während der Montage als separate Elemente an dem Träger angebracht werden. Solche Verschlüsse können vorgefertigt werden und für die Massenproduktion von erfindungsgemäßen induktiven Bauelementen mit einer Vielzahl von verschiedenen Konfigurationen in Bezug auf die Anzahl von Spulen und die Rastermaße der induktiven Bauelemente auf Lager gehalten werden.

Alternativ können die Verschlüsse als Teile des Trägers gebildet werden, die schwenkbar mit dem Träger verbunden sind und während der Montage des induktiven Bauelementes auf die Aussparungen geschwenkt werden. Wenn die Verschlüsse als Teile des Trägers ausgebildet werden gibt es keine Notwendigkeit, die Verschlüsse bei der Montage des induktiven Bauelementes dem Träger zuzuführen, so dass die Montage noch weiter vereinfacht ist.

Dadurch, dass die Paare von Endsegmenten in Paaren von Aussparungen angeordnet und durch gemeinsame Verschlüsse fixiert sind, wird eine kleinere Anzahl von Verschlüssen benötigt, um die Endsegmente in den Aussparungen paarweise zu fixieren, und die Endsegmente eines einzelnen Paares von Endsegmenten sind in einem Paar von Aussparungen entfernt voneinander platziert, so dass die Endsegmente inhärent elektrisch gegeneinander isoliert sind. Ferner können die Paare von Endsegmente auf gegenüberliegenden lateralen Seiten des Trägers angeordnet sein, so dass eine symmetrische Verdrahtungskonfiguration erreicht werden kann.

Ein erfindungsgemäßes induktives Bauelement kann ferner dadurch gekennzeichnet sein, dass die Drossel weitere Spulen mit weiteren Drähten umfasst, wobei weitere Endsegmente der weiteren Drähte durch Löcher in dem Träger verlaufen und auf der unteren Seite des Trägers enden. Solche Löcher für die Führung weiterer Endsegmente durch den Träger können an beliebigen Stellen auf dem Träger platziert werden, so dass die zur Verfügung stehende Fläche unter dem Träger in optimaler Weise genutzt werden kann.

In einer Ausführungsform umfasst die Drossel des induktiven Bauelementes insgesamt sechs Spulen, wobei jede der Spulen einen Draht mit zwei Endsegmenten umfasst. Ein erstes Paar der Endsegmente und ein zweites Paar der Endsegmente verlaufen durch Löcher auf gegenüberliegenden Seiten des Trägers neben der Drossel, und ein drittes bis sechstes Paar der Endsegmente sind in entsprechenden Paaren von Aussparungen an gegenüberliegenden lateralen Seite des Trägers neben der Drossel angeordnet. Das dritte bis sechste Paar Endsegmente können dann paarweise durch gemeinsame Verschlüsse fixiert werden.

Ein solches induktives Bauelement umfassend eine Drossel mit sechs Spulen kann als Filtereinrichtung zur Unterdrückung von Gleichtaktströmen in einer dreiphasigen Stromleitung, beispielsweise am Ausgang eines Dreiphasenleistungswandler wie einem Wechselrichter konfiguriert werden. Im Vergleich zu herkömmlichen Konfigurationen umfassend einen Träger mit Löchern als Führungsmittel für die Endsegmente ist die Montage eines erfindungsgemäßen induktiven Bauelementes wesentlich vereinfacht, da nur vier der zwölf Endsegmente so genau über den entsprechenden Löchern positioniert werden müssen, dass sie durch Bewegen der Drossel in Richtung des Trägers gleichzeitig durch die Löcher gedrückt werden. Die anderen acht Endsegmente können an seitlichen Positionen angeordnet werden und mit den Verschlüssen in einem separaten Schritt befestigt werden, nachdem die Drossel auf dem Träger befestigt ist.

In einer weiteren Ausführungsform hat der Kern der Drossel eine kreisrunde Form und umfasst ein Abstandselement innerhalb des Kerns. Eine Drehachse des Kerns ist parallel zur Oberfläche des Trägers ausgerichtet. Der Träger umfasst Verriegelungsmittel zum Verriegeln der Drossel auf dem Träger. Die Verriegelungsmittel erstrecken sich im Wesentlichen senkrecht zur Oberfläche des Trägers und rasten mit dem Abstandselement innerhalb des Kerns ein.

Ein Wechselrichter gemäß der Erfindung umfasst ein induktives Bauelement wie oben beschrieben. Ein solcher Wechselrichter kann kostengünstiger zusammengesetzt werden als ein Wechselrichter mit einem herkömmlichen induktiven Bauelement.

In einer Ausführungsform umfasst der Wechselrichter einen dreiphasigen Ausgang zum Verbinden mit einem Energieversorgungsnetz, wobei ein Ausgangsfilter am Ausgang des Wechselrichters angeordnet ist, wobei der Ausgangsfilter ein induktives Bauelement umfasst, das eine Drossel mit sechs Spulen in einer zur Unterdrückung von Gleichtaktströmen geeigneten Anordnung umfasst. Wenn das induktive Bauelement die oben beschriebenen Merkmale umfasst, sind die Herstellungskosten des Wechselrichters erheblich reduziert.

### KURZBESCHREIBUNG DER ZEICHNUNGEN

Die Erfindung kann besser unter Bezugnahme auf die folgenden Zeichnungen verstanden werden. Die Komponenten in den Zeichnungen sind nicht notwendigerweise maßstäblich, die Betonung liegt stattdessen auf einer klaren Veranschaulichung der Prinzipien der vorliegenden Erfindung. In den Zeichnungen entsprechen gleich bezeichnete Bezugszeichen gleichen Teilen in den verschiedenen Ansichten.
Fig. 1 zeigt ein induktives Bauelement gemäß der Erfindung in einer Explosionsdarstellung,
und Fig. 2 zeigt ein induktives Bauelement gemäß der Erfindung nach der Montage.

### DETAILLIERTE BESCHREIBUNG DER ZEICHNUNGEN

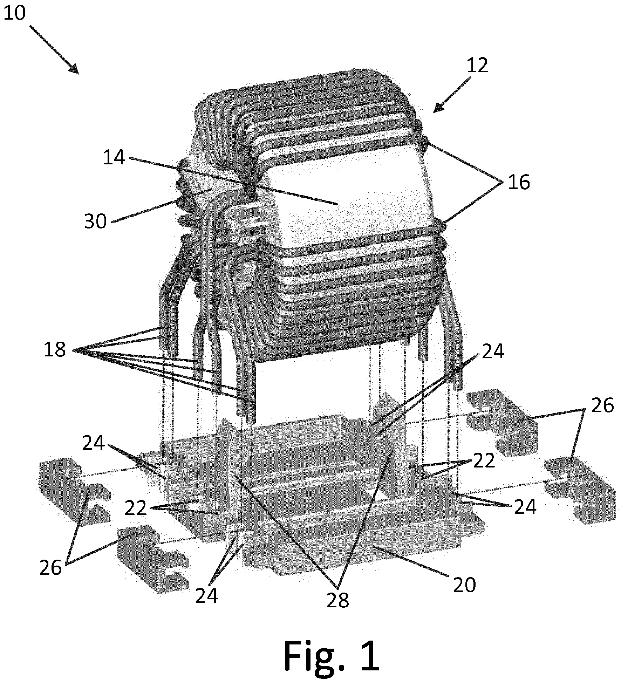

Das in Fig. 1 dargestellte induktive Bauelement 10 umfasst eine Drossel 12 mit einem Kern 14 und um den Kern 14 gewickelte Spulen 16. Die Spulen 16 weisen Endsegmente 18 zum Anschluss der Drossel 12 an eine übergeordnete Schaltung auf, beispielsweise an einen Wechselrichterausgang.

Das induktive Bauelement 10 weist ferner einen Träger 20 auf, auf dem die Drossel 12 montiert wird. Der Träger 20 weist Löcher 22 zum Führen der Endsegmente 18 durch den Träger 20 auf. Während der Herstellung muss sorgfältig sichergestellt werden, dass diese Endsegmente 18, die durch die Löcher 22 geführt werden sollen, so zu den Löchern 22 ausgerichtet werden, dass diese Endsegmente 18 in die Löcher 22 eingeführt werden können, indem die Drossel 12 in Richtung des Trägers 20 bewegt wird.

Der Träger 20 umfasst ferner an lateralen Seiten des Trägers 20 angeordnete Aussparungen 24 zum Führen der Endsegmente 18 durch den Träger 20. Bei der Herstellung ist es ausreichend, diejenigen Endsegmente 18, die durch die Aussparungen 24 geführt werden sollen, so anzuordnen, dass sie nicht den Träger 20 treffen, wenn die Drossel 12 in Richtung des Trägers bewegt wird. Dies kann leicht z.B. durch leichtes Biegen oder Verschieben dieser Endsegmente 18 seitlich nach außen erreicht werden.

Das induktive Bauelement 10 umfasst weiterhin Verschlüsse 26. In Fig. 1 sind diese Verschlüsse als separate Elemente gezeigt, die auf die Aussparungen 24 bewegt und nach der Montage der Drossel 12 auf dem Träger 20 an dem Träger 20 verriegelt werden können, so dass diejenigen Endsegmente 18, die durch die Aussparungen 24 laufen, von den Verschlüssen 26 innerhalb der Aussparungen 24 fixiert werden können. In einer alternativen Ausführungsform können die Verschlüsse 26 als Teile des Trägers 20 ausgebildet sein, die schwenkbar mit dem Träger 20 verbunden sind und während der Montage des induktiven Bauelementes 10 auf die Aussparungen 24 geschwenkt werden können.

Der Träger 20 umfasst weiterhin Verriegelungsmittel 28, beispielsweise Klammern oder Rasten, die im Wesentlichen senkrecht zur Oberfläche des Trägers 20 ausgerichtet sind. Die Drossel 12 weist ferner ein Abstandselement 30 innerhalb des Kerns 14 der Drossel 12 auf. Das Abstandselement 30 wird beispielsweise für die Aufrechterhaltung der Umfangspositionen der Spulen 16 und zur Führung von zwischen den tatsächlichen Wicklungen der Spulen 16 und den Endsegmenten 18 liegenden Abschnitten der Drähte der Spulen 16 durch den Kern 14 verwendet. Bei der Montage des induktiven Bauelementes 10 wird die Drossel 12 in Richtung des Trägers 20 bewegt. Sobald die Drossel 12 seine bestimmungsgemäße Position in Bezug auf den Träger 20 erreicht, klammern oder verriegeln die Verriegelungsmittel 28 auf dem Abstandselement 30, so daß die Drossel 12 sicher auf dem Träger 20 fixiert ist.

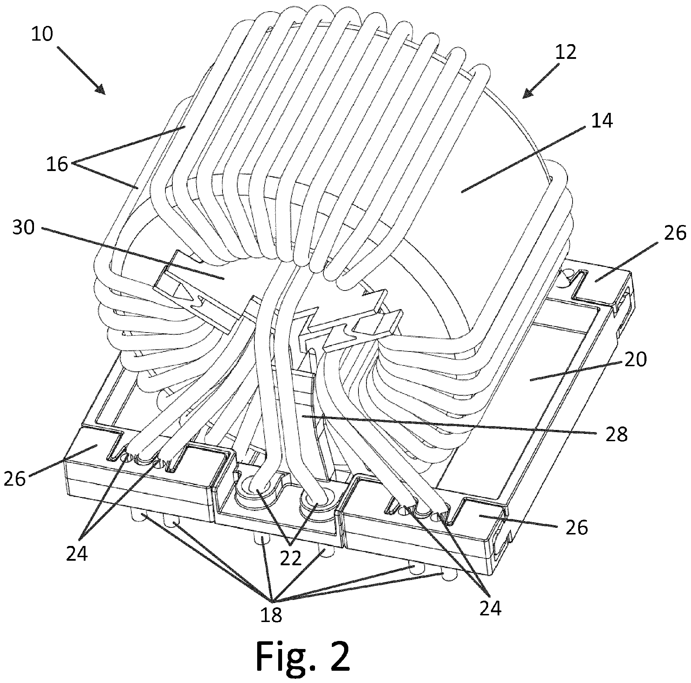

Fig. 2 zeigt ein erfindungsgemäßes induktives Bauelement nach dem Zusammenbau. Die Endsegmente 18 der Spulen 16 sind durch den Träger 20 geführt, entweder durch die Löcher 22 oder durch die Aussparungen 24. Diejenigen Endsegmente 18, die durch die Aussparungen 24 geführt sind, werden von den Verschlüssen 26 fixiert, so dass diese Endsegmente 18 an den dafür vorgesehenen Positionen sicher gehalten werden. Die Endsegmente 18 erstrecken sich in dem Bereich unterhalb des Trägers 20 mit einem festen Abstand zueinander, d.h. sie weisen ein vorgegebenes Rastermaß auf, so dass das induktive Bauelement 10 leicht auf einer Leiterplatte montiert werden kann, welche Löcher oder Lötstellen mit identischem Rastermaß aufweist.

### Bezuaszeichenliste

10 induktives Bauelement
12 Drossel
14 Kern
16 Spule
18 Endsegment
20 Träger
22 Loch
24 Aussparung
26 Verschluss
28 Verriegelungsmittel
30 Abstandselement

## Patentansprüche

1. Induktives Bauelement (10) zur Montage auf einer Leiterplatte, umfassend einen im Wesentlichen flachen Träger (20) und eine Drossel (12), wobei die Drossel (12) auf einer oberen Seite des Trägers (20) montiert ist und einen Kern (14) und mindestens zwei um den Kern (14) gewickelte Spulen (16) umfasst, wobei Drähte der mindestens zwei Spulen (16) Endsegmente (18) umfassen, die sich durch den Träger (20) und in einem zur oberen Seite des Trägers (20) entgegengesetzten Bereich unterhalb des Trägers (20) erstrecken, wobei der Träger (20) Aussparungen (24) zur Führung der Endsegmente (18) durch den Träger (20) und das induktive Bauelement (10) Verschlüsse (26) zum Fixieren der Endsegmente (18) der Drähte in den Aussparungen (24) aufweist, **dadurch gekennzeichnet, dass** Paare von Endsegmenten (18) in Paaren von Aussparungen (24) angeordnet und durch gemeinsame Verschlüsse (26) fixiert sind.

2. Induktives Bauelement (10) nach Anspruch 1, **dadurch gekennzeichnet, dass** je ein gemeinsamer Verschluss (26) ein Paar von Endsegmenten (18) in einem Paar von Aussparungen (24) und optional weitere einzelne Endsegmente (18) in weiteren einzelnen Aussparungen (24) und/oder weitere Paare von Endsegmenten (18) in weiteren Paaren von Aussparungen (24) fixiert.

3. Induktives Bauelement (10) nach Anspruch 1 oder 2, **dadurch gekennzeichnet, dass** die Verschlüsse (26) als separate Elemente oder als schwenkbar mit dem Träger verbundene Teile des Trägers (20) ausgebildet sind.

4. Induktives Bauelement (10) nach einem der vorhergehenden Ansprüche, **dadurch gekennzeichnet, dass** die Paare der Endsegmente (18) auf gegenüberliegenden lateralen Seiten des Trägers (20) angeordnet sind.

5. Induktives Bauelement (10) nach einem der vorhergehenden Ansprüche, **dadurch gekennzeichnet, dass** die Drossel (12) weitere Spulen (16) mit weiteren Drähte umfasst, wobei weitere Endsegmente (18) der weiteren Drähte durch Löcher (22) in dem Träger (20) verlaufen und sich in dem Bereich unterhalb des Trägers (20) erstrecken.

6. Induktives Bauelement (10) nach einem der vorhergehenden Ansprüche, **dadurch gekennzeichnet, dass** die Drossel (12) sechs Spulen (16) umfasst, wobei jede der Spulen (16) einen Draht mit zwei Endsegmenten (18) umfasst, wobei ein erstes Paar der Endsegmente (18) und ein zweites Paar der Endsegmente (18) durch Löcher (22) auf gegenüberliegenden Seiten des Trägers (20) neben der Drossel (12) verlaufen, und wobei das dritte bis sechste Paar der Endsegmente (18) in entsprechenden Paaren von Aussparungen angeordnet sind (24), die auf gegenüberliegenden lateralen Seite des Trägers (20) neben der Drossel (12) angeordnet sind und paarweise durch gemeinsame Verschlüsse (26) fixiert sind.

7. Induktives Bauelement (10) nach einem der vorhergehenden Ansprüche, **dadurch gekennzeichnet, dass** der Kern (14) eine kreisrunde Form aufweist und ein Abstandselement (30) innerhalb des Kerns (14) umfasst, wobei eine Drehachse des Kerns (14) parallel zu der Oberfläche des Trägers (20) orientiert ist, und dass der Träger (20) Verriegelungsmittel (28) zum Verriegeln der Drossel (12) mit dem Träger (20) umfasst, wobei die Verriegelungsmittel (28) die im Wesentlichen senkrecht zur Oberfläche des Trägers (20) ausgerichtet sind und in das Abstandselement (30) eingreifen.

8. Wechselrichter, umfassend ein Induktives Bauelement (10) nach einem der vorhergehenden Ansprüche.

9. Wechselrichter, umfassend einen dreiphasigen Ausgang zum Verbinden des Wechselrichters mit einem Stromversorgungsnetz, wobei ein Ausgangsfilter zur Unterdrückung von Gleichtaktströmen an dem Ausgang des Wechselrichters angeordnet ist, wobei der Ausgangsfilter ein Induktives Bauelement (10) nach Anspruch 6 umfasst.

## Claims

1. Inductance device (10) for mounting on a printed circuit board comprising a substantially flat tray (20) and a choke (12), wherein the choke (12) is mounted on an upper side of the tray (12) and comprises a core (14) and at least two coils (16) wound around the core (14), wherein wires of the at least two coils (16) comprise end segments (18) extending through the tray (20) and in a region below the tray (20) opposite to the upper side of the tray (20), wherein the tray (20) comprises notches (24) for guiding the end segments (18) through the tray (20) and inductance device (10) further comprises latches (26) for fixing the end segments (18) of the wires within the notches (24), **characterised in that** pairs of end segments (18) are placed in pairs of notches (24) and fixed by common latches (26).

2. Inductance device (10) according to claim 1, **characterised in that** each of the common latches (26) fixes a pair of end segments (18) in a pair of notches (24) and optionally further end segments (18) in further notches (24) and/or further pairs of end segments (18) in further pairs of notches (24)

3. Inductance device (10) according to claim 1 or 2, **characterised in that** the latches (26) are formed as separate elements, or as parts of the tray (20) which are pivotably connected to the tray.

4. Inductance device (10) according to any of the preceding claims, **characterised in that** the pairs of end segments (18) are placed on opposite lateral sides of the tray (20).

5. Inductance device (10) according to any of the preceding claims, **characterised in that** the choke (12) comprises further coils (16) comprising further wires, wherein further end segments (18) of the further wires run through holes (22) in the tray (20) and extend into the region below the tray (20).

6. Inductance device (10) according to any of the preceding claims, **characterised in that** the choke (12) comprises six coils (16), each of the coils (16) comprising a wire with two end segments (18), wherein a first pair of end segments (18) and a second pair of end segments (18) run through holes (22) on opposite sides of the tray (20) besides the choke (12), and wherein third to sixth pairs of end segments (18) are placed in respective pairs of notches (24) arranged on opposite lateral side of the tray (20) besides the choke (12) and fixed pairwise by common latches (26).

7. Inductance device (10) according to any of the preceding claims, **characterised in that** the core (14) has a circular shape and comprises a spacer element (30) arranged within the core (14), wherein a rotational axis of the core (14) is oriented parallel to the surface of the tray (20), and that the tray (20) comprises locking means (28) for locking the choke (12) to the tray (20), said locking means (28) extending substantially perpendicular to the surface of the tray (20) and engaging with the spacer element (30).

8. Inverter comprising an inductance device (10) according to any of the preceding claims.

9. Inverter comprising a three-phase output for connecting the inverter to a power supply grid, wherein an output filter for suppressing common mode currents is arranged at the output of the inverter, said output filter comprising an inductance device (10) according to claim 6.

## Revendications

1. Composant inductif (10) destiné à être monté sur une carte de circuit et comprenant un support (20) essentiellement plat et une inductance (12),
l'inductance (12) étant montée sur un côté supérieur du support (20) et présentant un noyau (14) et au moins deux bobinages (16) enroulés autour du noyau (14),
les fils des deux ou plusieurs bobinages (16) comportant des segments d'extrémité (18) qui traversent le support (20) et s'étendent en dessous du support (20) dans une partie opposée au côté supérieur du support (20),
le support (20) présentant des découpes (24) qui guident les segments d'extrémité (18) à travers le support (20) et le composant inductif (10) présentant des fermetures (26) qui fixent les segments d'extrémité (18) des fils dans les découpes (24),
**caractérisé en ce que**
des paires des segments d'extrémité (18) sont disposées dans des paires de découpes (24) et sont fixées par des fermetures communes (26).

2. Composant inductif (10) selon la revendication 1, **caractérisé en ce qu'**une fermeture commune (26) fixe une paire des segments d'extrémité (18) dans une paire de découpes (24) et facultativement d'autres segments d'extrémité distincts (18) dans d'autres découpes distinctes (24) et/ou d'autres paires de segments d'extrémité (18) dans d'autres paires de découpes (24).

3. Composant inductif (10) selon les revendications 1 ou 2, **caractérisé en ce que** les fermetures (26) sont configurées comme éléments séparés ou parties du support (20) reliées de manière pivotante au support.

4. Composant inductif (10) selon l'une des revendications précédentes, **caractérisé en ce que** les paires de segments d'extrémité (18) sont disposées sur des côtés latéraux opposés du support (20).

5. Composant inductif (10) selon l'une des revendications précédentes, **caractérisé en ce que** l'inductance (12) comporte d'autres bobinages (16) présentant d'autres fils, d'autres segments d'extrémité (18) des autres fils traversant le support (20) par des trous (22) et s'étendant dans la partie située en dessous du support (20).

6. Composant inductif (10) selon l'une des revendications précédentes, **caractérisé en ce que** l'inductance (12) comporte six bobinages (16), chacun des bobinages (16) comportant un fil doté de deux segments d'extrémité (18), une première paire de segments d'extrémité (18) et une deuxième paire de segments d'extrémité (18) s'étendant sur les côtés opposés du support (20) par des trous (22) disposés à côté de l'inductance (12), la troisième jusqu'à la sixième paire de segments d'extrémité (18) étant disposées (24) dans des paires correspondantes de découpes qui sont disposées sur les côtés latéraux opposés du support (20) à côté de l'inductance (12) et étant fixées deux à deux par des fermetures communes (26).

7. Composant inductif (10) selon l'une des revendications précédentes, **caractérisé en ce que** le noyau (14) présente une forme circulaire et comporte un élément d'écartement (30) situé à l'intérieur du noyau (14), l'axe de rotation du noyau (14) étant orienté parallèlement à la surface du support (20), et **en ce que** le support (20) comporte des moyens de verrouillage (28) qui verrouillent l'inductance (12) sur le support (20), les moyens de verrouillage (28) étant orientés essentiellement perpendiculairement à la surface du support (20) et engageant l'élément d'écartement (30).

8. Onduleur comportant un composant inductif (10) selon l'une des revendications précédentes.

9. Onduleur comprenant une sortie triphasée destinée à relier l'onduleur à un réseau d'alimentation en courant, un filtre de sortie servant à la réjection en mode commun étant disposé à la sortie de l'onduleur, le filtre de sortie comportant un composant inductif (10) selon la revendication 6.
